# EUROPEAN PATENT APPLICATION

(11) **EP 4 814 905 A1**
(43) Date of publication of application: **30.09.2026**
(21) Application number: 25220048.0
(22) Date of filing: 02.12.2025
(51) Int. Cl.: G06V 40/16, G06V 10/82, G06V 10/75, G06V 10/44, G06V 10/26, G06T 7/11

(54) **FACE CROP FOR SKIN SEGMENTATION ACCURACY AND CONSISTENCY**

(30) Priority: 27.03.2025 US 202519092011
(71) Applicant: INTEL Corporation, Santa Clara, CA 95054 (US)
(72) Inventor: KLEIN, Moran, 4372208 Ra'anana (IL); ZATZARINNI, Rony, Tel Aviv (IL); BARBER, Dor, Herzliya (IL)
(74) Representative: Viering, Jentschura & Partner mbB Patent- und Rechtsanwälte

(57) **Abstract**

Systems and methods for a skin segmentation framework that leverages facial crop as prior knowledge. In particular, the system employs a cross-attention mechanism to transfer features extracted from the face region to guide the main segmentation network. By utilizing the face as a reference point for skin tone and lighting conditions, the model learns to adapt to diverse environmental scenarios and varying skin appearances. This approach significantly enhances skin segmentation accuracy and robustness compared to traditional color-based and deep learning methods, particularly in challenging lighting conditions. Any changes to pixels representing skin (e.g., white balance, auto exposure) are consistent with the changes in the face crop, and thus skin segmentation colors can be updated to reflect the changes. The model results in consistent and robust skin pixel detection across diverse lighting conditions and image processing variations, significantly enhancing the performance and reliability of applications that depend on accurate skin segmentation.

## Description

### Technical Field

This disclosure relates generally to image processing, and in particular to skin segmentation.

### Background

Skin segmentation is used for image processing applications such as beautification, action recognition, gesture recognition, face recognition, facial expression recognition, content-based image retrieval, filtering of objectionable content, skin rendering in computer graphics, and virtual reality. Traditional skin segmentation approaches rely heavily on color features, and fail to accurately process the wide spectrum of skin tones present in natural images. The large range of skin tones can be due to many different factors, including varying lighting conditions, illumination colors, and exposure time, as well as the wide range of natural skin tones and colors. Different image processing techniques such as white balance correction, color reproduction, and tone mapping algorithm also contribute to the large range of skin tones. These factors expand the color range of skin pixels in the image, significantly impacting the accuracy and reliability of skin pixel detection. Additionally, existing training datasets are biased in representing the spectrum of skin colors, causing the models to degrade in accuracy for skin colors that are underrepresented in the dataset.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 is a block diagram of an example skin segmentation system 100, in accordance with various embodiments.
FIG. 2 illustrates an example skin segmentation architecture 200, in accordance with various embodiments.
FIG. 3 illustrates an example of cross-attention module operations 300, in accordance with various embodiments.
FIG. 4 illustrates skin segmentation outputs from two different models based on three input images, in accordance with various embodiments.
FIG. 5 is a flowchart showing a method 500 for skin segmentation using face crop, in accordance with various embodiments.
FIG. 6 is a block diagram of an example DNN system, in accordance with various embodiments.
FIG. 7 illustrates an example DNN, in accordance with various embodiments.
FIG. 8 is a block diagram of an example computing device, in accordance with various embodiments.

### Detailed Description

### Overview

Skin segmentation is used in image processing to identify areas of skin in images including people. Skin segmentation can be used to identify the face, hands, and/or other body parts for various applications, such as beautification, action recognition, gesture recognition, face recognition, facial expression recognition, content-based image retrieval, filtering of objectionable content, skin rendering in computer graphics, and virtual reality. However, traditional skin segmentation techniques are inconsistent across different lighting conditions and image processing variations, which can change over time. For example, during a conference call, the illumination strength may change, altering the brightness level of the skin, and causing a skin segmentation module to change its identification of image areas including skin. Systems and methods are provided herein for more robust and accurate identification of pixels representing skin. The systems and methods provide accurate skin segmentation under diverse imaging conditions, including different lighting conditions. In some implementations, information from a cropped image of the face (e.g., received from a face detection module) is leveraged to identify skin tone. In particular, the information from the cropped image of the face can be integrated into a detection deep neural network using a cross-attention mechanism.

Techniques for skin segmentation have included color-based models, which use predefined color ranges to identify skin pixels. Color-based models often rely on color spaces such as RGB, HSV, and YCbCr to segment skin regions. However, color-based models are highly sensitive to lighting conditions, white balance, and exposure, causing inaccurate results. The color range of skin can be very large due to the natural range of skin colors, lighting strength, lighting color, and different processing techniques (e.g., white balance and color reproduction). Color-based models for skin segmentation lack contextual knowledge (such as the person's anatomy) and typically fail by segmenting objects with colors similar to skin colors.

Other techniques for skin segmentation have included machine learning algorithms and deep learning networks. These algorithms train on labeled datasets to classify skin and non-skin pixels. Convolutional neural networks (CNNs) and fully convolutional networks (FCNs) are commonly used to learn features from the entire image for skin segmentation. However, machine learning algorithms and deep learning networks may not generalize well to diverse lighting conditions and skin tones. These models can struggle with varying lighting conditions and may not effectively leverage contextual information from the image. Additionally, most training datasets have bias on the representation of all human skin colors, with some skin colors represented much more frequently than other skin colors, which can lead to inaccuracies for certain skin colors.

Additional skin segmentation techniques include texture and contextual information models, which focus on automatically detecting human skin in images without reliance on color information. In particular, texture and contextual information models focus on texture and contextual information to identify skin pixels. However, texture and contextual information models have difficulty providing consistent skin segmentation across a wide range of conditions. Additionally, texture and contextual information models are unable to leverage existing camera components to identify skin pixels. The texture and contextual information model approach uses extensive dataset augmentation and is still affected by variations in texture and context that are not related to skin.

Systems and methods are presented herein for an end-to-end skin segmentation framework that leverages facial crop as prior knowledge. In particular, the system employs a cross-attention mechanism to transfer features extracted from the face region (e.g., from a cropped image of the face) to guide the main segmentation network. By utilizing the face as a reference point for skin tone and lighting conditions, the model learns to adapt to diverse environmental scenarios and varying skin appearances. This approach significantly enhances skin segmentation accuracy and robustness compared to traditional color-based and deep learning methods, particularly in challenging lighting conditions.

Thus, in various embodiments, systems and methods are provided to leverage the face detection capabilities that exist in most cameras to provide a solution for skin segmentation. Using the face crop, the model focuses on relevant skin segmentation colors, resulting in high accuracy identification of pixels representing skin. Additionally, any changes to pixels representing skin (e.g., white balance, auto exposure) are consistent with the changes in the face crop, and thus relevant skin segmentation colors can be updated to reflect the changes. The model results in consistent and robust skin pixel detection across diverse lighting conditions and image processing variations, significantly enhancing the performance and reliability of applications that depend on accurate skin segmentation.

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" or the phrase "A or B" means (A), (B), or (A and B). For the purposes of the present disclosure, the phrase "A, B, and/or C" or the phrase "A, B, or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or systems. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

### Example Skin Segmentation System

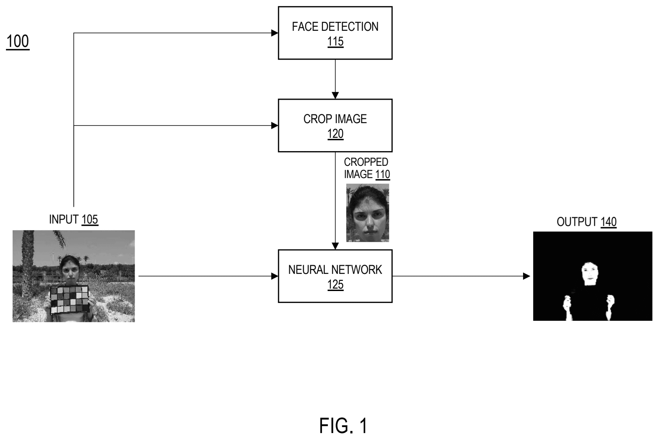

FIG. 1 is a block diagram of an example skin segmentation system 100, in accordance with various embodiments. An input image 105 is received at the skin segmentation system 100, and the input image 105 is input to a face detection module 115, a crop image module 120, and a neural network 125. The face detection module 115 identifies the area of the input image 105 that includes a face, and the crop image module 120 crops the input image 105 to just the area including the face, based on the face detection module 115 identification. The cropped image 110 is input to the neural network 125 along with the input image 105.

The neural network 125 identifies skin tones based on the face in the cropped image 110, and performs skin segmentation on the input image 105 to identify skin tone pixels in the input image 105 based on the skin tones identified from the cropped image 110. In various implementations, the skin segmentation system 100 identifies skin tones based on the assumption that the main portion of the face in the cropped image 110 is skin-toned. Thus, even if the identified face area has skin tones that are different from general skin tone colors (e.g., if the image is tinted green and the skin tones are green), the colors of the face in the cropped image 110 are used as the skin tones to identify areas of skin in the input image 105. The neural network 125 generates an output 140 that identifies the skin tones. As shown in FIG. 1, to identify the pixels representing skin, the output 140 is a black and white image with identified skin pixels shown in white and other (non-skin) pixels shown in black.

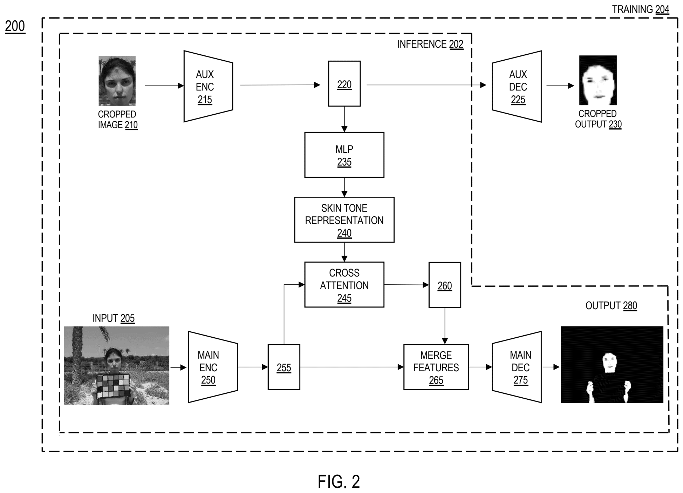

FIG. 2 illustrates an example skin segmentation architecture 200, in accordance with various embodiments. The skin segmentation architecture 200 receives an input image 205 and a corresponding cropped image 210. In various examples, the cropped image 210 can be generated from the input image 205 as described with respect to the input image 105 and the cropped image 110 of FIG. 1.

FIG. 2 illustrates the components of the skin segmentation architecture 200 in inference mode 202 and also during training 204, as outlined in the dashed blocks. The skin segmentation architecture 200 includes two encoder-decoder subnetworks: a main network including a main encoder 250 and a main decoder 275, and an auxiliary network including an auxiliary encoder 215 and an auxiliary decoder 225. In some implementations, the auxiliary network is a smaller and shallower version of the main network. The auxiliary network and the main network can be trained together for skin segmentation. During training, the auxiliary decoder 225 generates a cropped skin segmentation output 230, which can be compared to a ground truth facial crop skin segmentation map. Similarly, the main decoder 275 generates a full image skin segmentation output 230, which can be compared to a ground truth full image skin segmentation map. In various examples, the auxiliary decoder 225 is used during training 204 and the auxiliary decoder 225 is not used during inference 202.

In various implementations, the auxiliary encoder 215 and auxiliary module 220 generate auxiliary facial features for the cropped image 210. In some examples, the auxiliary facial features can be skin tone features. In various examples, skin tone features can include color, hue, saturation, brightness, luminance, chromaticity, texture, reflectance. Color can be RGB values, including the red, green, and blue color values of the shade of the skin in the cropped image 210. The hue, saturation, and brightness can provide additional information about the color and intensity of the skin tone in the cropped image 210. Luminance can include a level of brightness of the skin, which can include how light or dark the skin appears in the cropped image 210.

A multi-layer perceptron (MLP) layer 235 is applied to the auxiliary facial features. A MLP can be a deep learning neural network, such as a feed forward neural network. The MLP layer 235 can have fully connected neurons and nonlinear activation functions. In various implementations, the MLP layer 235 can emphasize relevant features and the MLP layer 235 can transform the auxiliary facial features from an auxiliary task domain to a main task domain for use at the cross-attention module 245. In various examples, the output of the MLP layer 235 is a latent representation of the skin in the cropped image 210. In various examples, the output of the MLP layer 235 is skin tone representation 240. In various examples, the skin tone representation 240 includes the tones (colors, hues, shading, etc.) of pixels identified as skin in the cropped image 210. Thus, in one example, if the input image 205, and thus the cropped image 210, is tinted green and the pixels representing the skin of the face in the cropped image 210 are various green tones, these tones will be identified as skin tones in the skin tone representation 240.

The main encoder 250 receives the full input image 205 and extracts features from the full input image 205. In some examples, the extracted features can include edges, textures, shapes, colors, objects, depth, spatial relationships, etc., and in some examples, the extracted features can include facial features. The cross-attention module 245 receives the skin tone representation 240 and extracted features from the main encoder 250, and the cross-attention module 245 outputs cross-attention features. In particular, the cross-attention module 245 emphasizes skin-related features and de-emphasizes non-skin-related features, such that the cross-attention features are skin-related features and areas of the image that represent skin. The cross-attention module 245 can emphasize skin related-related features such as skin tone, skin texture, skin pigmentation, etc. In some examples, the cross-attention module 245 can identify skin-related features based on the skin tone representation 240. In some examples, extracted features from the main encoder 250 from areas of the input image 205 that are not skin, based on the skin tone representation 240, are de-emphasized. Thus, for instance, in the input image 205, non-skin features such as features related to the background (e.g., texture and/or color of the sky, the grass, the palm tree, etc.), as well as non-skin features related to the foreground (e.g., texture and/or color of the checkboard, the shirt, the hair, etc.) can be de-emphasized.

In some examples, the cross-attention module 245 emphasizes skin-related features and de-emphasizes non-skin-related features using a relative weight vector. In some examples, a feature vector of the input can be weighted to enhance and/or emphasize skin-related features. In some examples, similarity is measured between the pixels of the face in the cropped image 210 and pixels of the full input image 205. Using the similarity measurement for each pixel of the full input image 205, a weighted feature vector can be generated for the input image.

In various implementations, the extracted features from the main encoder 250 can be projected onto the latent representation of the skin of the cropped image via a cross-attention module 245 to generate the cross-attention features. In some examples, the projection provides a degree of similarity between each pixel in the input image 205 and the skin tone representation 240, such that the similarity is high when the pixel in the input image 205 is skin and the similarity is low when the pixel in the input image 205 is not skin.

The extracted features output from the main encoder 250 can be combined with the cross-attention features output from the cross-attention module 245 at a merge features module 265. In some examples, the extracted features output from the main encoder 250 can be combined with the cross-attention features output from the cross-attention module 245 by summation. That is, the extracted features output from the main encoder 250 and the cross-attention features output from the cross-attention module 245 can be added together. The merge features module 265 outputs merged features which can be decoded by the main decoder 275 to generate a full skin segmentation output.

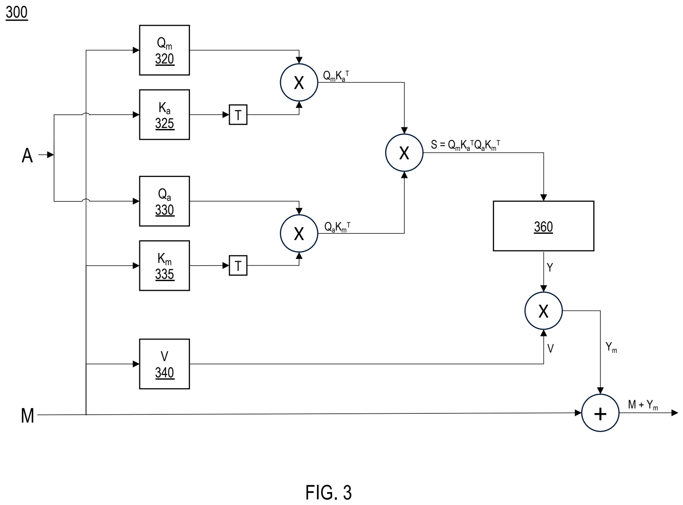

FIG. 3 illustrates an example of cross-attention module operations 300, in accordance with various embodiments. In some implementations, the cross-attention module operations 300 can be computationally heavy. Thus, the operations can be calculated between one scale of the main network features to one scale of the auxiliary network features.

The cross-attention module operations 300 shown in FIG. 3 use the variables K (key), Q (query), V (value). In some examples, the auxiliary network features are denoted: *A^{H^{axWaCa}},* and the main network features are denoted: *M^{H^{mxWmxCm}}.* In some examples, *H* and *W* are the dimensions of the image, and *C* is the number of channels of the feature vector. Note that *H* and *W* are different for the auxiliary network features and the main network features, since the input to the auxiliary encoder is a different resolution from the input to the main encoder. Using these features, the following linear projections can be applied: ${M}^{{H}_{m} {xW}_{m} {xC}_{m}} \to {Q}_{m}^{{H}_{m} {xW}_{m} xC}$ ${M}^{{H}_{m} {xW}_{m} {xC}_{m}} \to {K}_{m}^{{H}_{m} {xW}_{m} xC}$ ${A}^{{H}_{a} {xW}_{a} {xC}_{a}} \to {Q}_{a}^{{H}_{a} {xW}_{a} xC}$ ${A}^{{H}_{a} {xW}_{a} {xC}_{a}} \to {K}_{a}^{{H}_{a} {xW}_{a} xC}$ ${M}^{{H}_{m} {xW}_{m} {xC}_{m}} \to {V}^{{H}_{m} {xW}_{m} xC}$

Inter score matrices can be determined using the following determinations: ${S}_{ma}^{\left({H}_{m}{xW}_{m}\right) x \left({H}_{a}{xW}_{a}\right)} = {Q}_{m} {K}_{a}^{T}$ ${S}_{am}^{\left({H}_{a}{xW}_{a}\right) x \left({H}_{m}{xW}_{m}\right)} = {Q}_{a} {K}_{m}^{T}$

The spatial dimensions of the auxiliary features can be reduced to generate a final score matrix: ${S}^{\left({H}_{m}{xW}_{m}\right) x \left({H}_{m}{xW}_{m}\right)} = {S}_{ma} {S}_{am} = \left({Q}_{m}{K}_{a}^{T}\right) \left({Q}_{a}{K}_{m}^{T}\right)$

The cross-attention (Y) can be determined using the following equation: $Y = Soft max \left(\frac{S}{C \sqrt{{H}_{a} {W}_{a}}}\right) V$

Note *V* 340 can be a representation of the main input image, which is the full resolution image. Thus, the weighted matrix is applied to *V*.

In some examples, for cross-attention, the dimensions of the auxiliary image are aligned with the dimensions of the main input image.

In various examples, a linear projection can be applied on Y for channel dimension alignment using the following equation: ${Y}^{{H}_{m} {xW}_{m} xC} = {Y}^{{H}_{m} {xW}_{m} {xC}_{m}}$

In various examples, the output from the cross-attention module is the summation of the main network features M and *Yₘ,* such that: $O = M + {Y}_{m}$

Note that if features *M* and *Yₘ,* are added and not concatenated, since concatenation would increase the number of channels to be decoded. With summation, the number of channels remains the same. Thus, *O* has the same number of channels as *M*, and *O* has the same number of channels as *Yₘ.*

In various implementations, two different inter score matrices can be used. In some examples, weighted summation on the spatial dimensions of the auxiliary features of one inter score matrix (such as ${S}_{ma} ⋅ {S}_{ma}^{T}$) results in a non-negative element-wise matrix. This can result in restrictions on the cross-attention matrix.

In general, the skin segmentation systems described herein enhance skin segmentation accuracy. However, there can be certain situations in which the skin segmentation systems are limited. For example, in some scenarios, the face color of a subject can be different from other skin parts, such as when the person has heavy makeup. When the color of the skin of the face is different from other skin in the image, the skin segmentation systems using face crop may not provide an accurate reference for skin color, disrupting the model's ability to accurately detect skin pixels. In another example, if face detection fails, loses tracking, or provides false estimations, the face crop (which is used as a prior knowledge input) may be incorrect or unavailable, thereby affecting the model's performance.

According to various implementations, strategies to address the above potential scenarios that can affect the skin segmentation system accuracy include training strategies and a network architecture strategy. The training strategies can include augmentation, wherein during training, the model is occasionally provided with incorrect face crops and/or black crops (all zeros) with a small probability. Other training strategies can include providing images in which there are no humans and this no face and no skin. A network architecture strategy includes summing cross-attention features to the main network features, such that the cross-attention features serve as enhancement features. Training strategies (and network architecture strategies) such as the examples presented herein ensure that the model does not rely entirely on the auxiliary features and develops independent methods to detect skin pixels. These strategies help the model maintain robustness when face crop is inaccurate or unavailable.

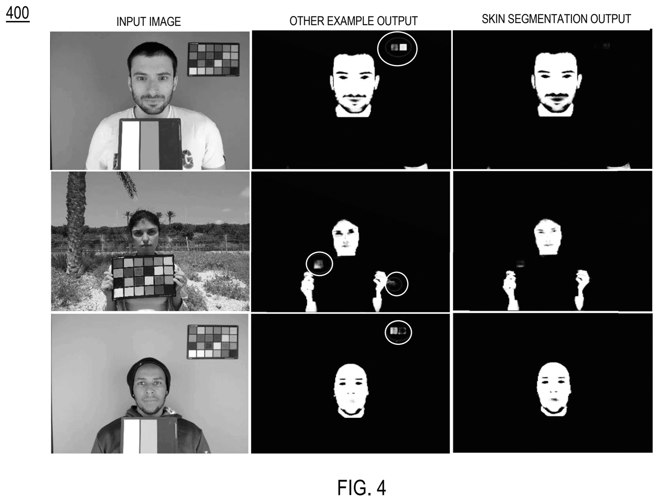

FIG. 4 illustrates skin segmentation outputs from two different models based on three input images, in accordance with various embodiments. The input images to both models are shown in the left column. The output from the skin segmentation systems and methods as described herein is shown in the right column. For comparison, the output from previous systems is shown in the middle column. The white circles in the middle column highlight areas of the skin segmentation outputs that were inaccurately identified as being skin. As illustrated in FIG. 4, the systems and methods described herein, including the cross-attention layer that receives data from an auxiliary network encoder providing face features from a cropped image, result in more accurate skin segmentation output.

### Example Method for Skin Segmentation

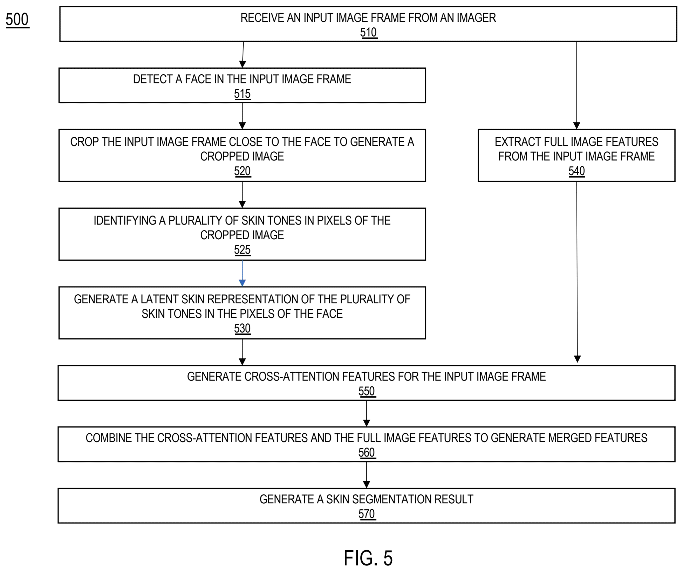

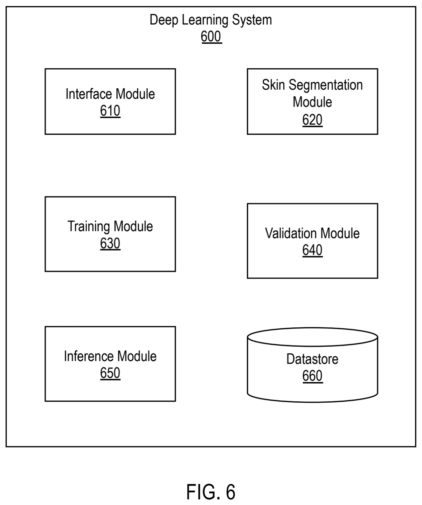

FIG. 5 is a flowchart showing a method 500 for skin segmentation using face crop, in accordance with various embodiments. The method 500 may be performed by the skin segmentation system 100 of FIG. 1, by the skin segmentation architecture 200 of FIG. 2, and/or by the deep learning system 600 in FIG. 6. Although the method 500 is described with reference to the flowchart illustrated in FIG. 5, other methods for skin segmentation may alternatively be used. For example, the order of execution of the elements in FIG. 5 may be changed. As another example, some of the elements may be changed, eliminated, or combined.

At 510, an input image frame is received from an imager. At 515, a face is detected in the input image frame. At 520, the input image frame is cropped close to the face to generate a cropped image. The cropped image can be input to an auxiliary encoder, such as the encoder 215 of FIG. 2 for identification of skin tones. The encoder can generate auxiliary facial features from the cropped image. In some examples, the auxiliary facial features can be skin tones.

At 525, a plurality of skin tones are identified in pixels of the face in the cropped image. At 530, a latent skin representation is generated of the plurality of skin tones in the pixels of the face in the cropped image.

At 540, full image features are extracted from the input image frame. In some examples, the input image frame is input to an encoder such as the main encoder 250 of FIG. 2.

At 550, cross-attention features are generated for the input image frame based on the latent skin representation and the full image features. In some examples, the latent skin representation and the full image features are input to a cross-attention module. At 560, the cross-attention features and the full image features are combined to generate merged features. In some examples, the cross-attention features and the full image features are combined by summation. At 570, a skin segmentation result is generated based on the merged features. In some examples, the merged features are decoded to generate the skin segmentation result.

### Example DNN System for Skin Segmentation

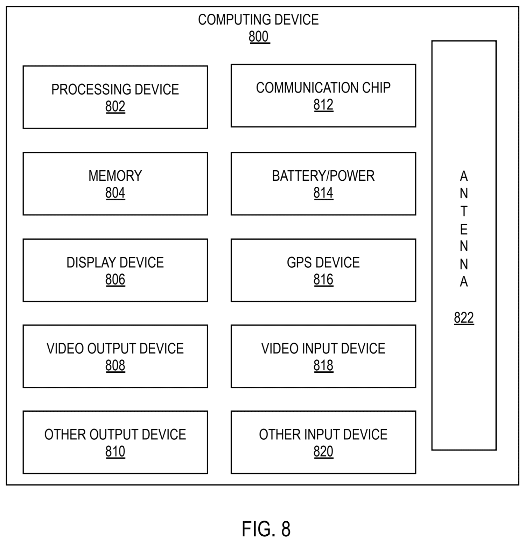

FIG. 6 is a block diagram of an example DNN system 600, in accordance with various embodiments. The DNN system 600 trains DNNs for various tasks, including skin segmentation of images, including images in video streams. The DNN system 600 includes an interface module 610, a skin segmentation module 620, a training module 630, a validation module 640, an inference module 650, and a datastore 660. In other embodiments, alternative configurations, different or additional components may be included in the DNN system 600. Further, functionality attributed to a component of the DNN system 600 may be accomplished by a different component included in the DNN system 600 or a different system. The DNN system 600 or a component of the DNN system 600 (e.g., the training module 630 or inference module 650) may include the computing device 800 in FIG. 8.

The interface module 610 facilitates communications of the DNN system 600 with other systems. As an example, the interface module 610 supports the DNN system 600 to distribute trained DNNs to other systems, e.g., computing devices configured to apply DNNs to perform tasks. As another example, the interface module 610 establishes communications between the DNN system 600 with an external database to receive data that can be used to train DNNs or input into DNNs to perform tasks. In some embodiments, data received by the interface module 610 may have a data structure, such as a matrix. In some embodiments, data received by the interface module 610 may be an image, a series of images, and/or a video stream.

The skin segmentation module 620 performs skin segmentation on received images. In some examples, the skin segmentation module 620 performs skin segmentation on real-world videos. In general, the skin segmentation module includes an auxiliary network to identify skin tones in a cropped version of the received image focusing on a face, and a main network to perform skin segmentation on the received image. During training, the skin segmentation module 620 can use ground truth skin segmentation results.

The training module 630 trains DNNs by using training datasets. In some embodiments, a training dataset for training a DNN may include one or more images and/or videos, each of which may be a training sample. In some examples, the training module 630 trains the skin segmentation module 620. The training module 630 may receive real-world image and/or video data for processing with the skin segmentation module 620 as described herein. In some embodiments, the training module 630 may input different data into different layers of the DNN. For every subsequent DNN layer, the input data may be less than the previous DNN layer. The training module 630 may adjust internal parameters of the DNN to minimize a difference between ground truth skin segmentation results and the output from the skin segmentation module 620. In some examples, the skin segmentation module 620 can be trained with labeled ground truth images. In some examples, the difference between skin segmentation module 620 output and the corresponding groundtruth skin segmentation results can be measured as the number of pixels in the corresponding skin segmentation results that are different from each other.

In some embodiments, a part of the training dataset may be used to initially train the DNN, and the rest of the training dataset may be held back as a validation subset used by the validation module 640 to validate performance of a trained DNN. The portion of the training dataset not including the tuning subset and the validation subset may be used to train the DNN.

The training module 630 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 10, 50, 100, or even larger.

The training module 630 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different categories by training.

In the process of defining the architecture of the DNN, the training module 630 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 630 defines the architecture of the DNN, the training module 630 inputs a training dataset into the DNN. The training dataset includes a plurality of training samples. An example of a training dataset includes a series of images of a video stream. Unlabeled, real-world video is input to the skin segmentation module, and processed using the skin segmentation module parameters of the DNN to produce model-generated outputs. The internal parameters include weights of filters in the convolutional layers of the DNN. In some embodiments, the training module 630 uses a cost function to minimize the differences.

The training module 630 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 630 finishes the predetermined number of epochs, the training module 630 may stop updating the parameters in the DNN. The DNN having the updated parameters is referred to as a trained DNN.

The validation module 640 verifies accuracy of trained DNNs. In some embodiments, the validation module 640 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 640 may determine an accuracy score measuring the precision, recall, or a combination of precision and recall of the DNN. The validation module 640 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 640 may compare the accuracy score with a threshold score. In an example where the validation module 640 determines that the accuracy score of the augmented model is lower than the threshold score, the validation module 640 instructs the training module 630 to re-train the DNN. In one embodiment, the training module 630 may iteratively re-train the DNN until the occurrence of a stopping condition, such as the accuracy measurement indication that the DNN may be sufficiently accurate, or a number of training rounds having taken place.

The inference module 650 applies the trained or validated DNN to perform tasks. The inference module 650 may run inference processes of a trained or validated DNN. In some examples, inference makes use of the forward pass to produce model-generated output for unlabeled real-world data. For instance, the inference module 650 may input real-world data into the DNN and receive an output of the DNN. The output of the DNN may provide a solution to the task for which the DNN is trained for.

The inference module 650 may aggregate the outputs of the DNN to generate a final result of the inference process. In some embodiments, the inference module 650 may distribute the DNN to other systems, e.g., computing devices in communication with the DNN system 600, for the other systems to apply the DNN to perform the tasks. The distribution of the DNN may be done through the interface module 610. In some embodiments, the DNN system 600 may be implemented in a server, such as a cloud server, an edge service, and so on. The computing devices may be connected to the DNN system 600 through a network. Examples of the computing devices include edge devices.

The datastore 660 stores data received, generated, used, or otherwise associated with the DNN system 600. For example, the datastore 660 stores video processed by the skin segmentation module 620 or used by the training module 630, validation module 640, and the inference module 650. The datastore 660 may also store other data generated by the training module 630 and validation module 640, such as the hyperparameters for training DNNs, internal parameters of trained DNNs (e.g., values of tunable parameters of activation functions, such as Fractional Adaptive Linear Units (FALUs)), etc. In the embodiment of FIG. 6, the datastore 660 is a component of the DNN system 600. In other embodiments, the datastore 660 may be external to the DNN system 600 and communicate with the DNN system 600 through a network. For skin segmentation module training, the input can include an input image frame and a labeled groundtruth skin segmentation result. In various examples, the input image frame is received at a skin segmentation module such as the skin segmentation systems of FIGS. 1 and 2. In other examples, the input image frame can be received at the training module 630 or the inference module 650 of FIG. 6. The imager can be a camera, such as a video camera. The input image frame can be a still image from the video camera feed. The input image frame can include a matrix of pixels, each pixel having a color, lightness, and/or other parameter.

### Example CNN System for Skin Segmentation

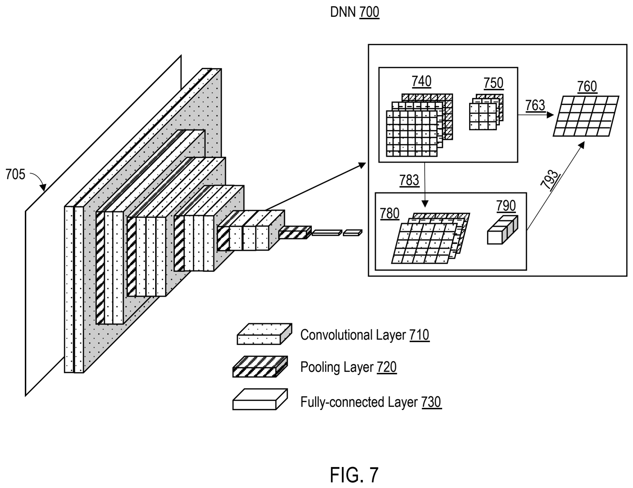

FIG. 7 illustrates an example DNN 700, in accordance with various embodiments. For purpose of illustration, the DNN 700 in FIG. 7 is a CNN. In other embodiments, the DNN 700 may be other types of DNNs. The DNN 700 is trained to receive images and output classifications of objects in the images. In the embodiments of FIG. 7, the DNN 700 receives an input image 705 that includes objects. The DNN 700 includes a sequence of layers comprising a plurality of convolutional layers 710 (individually referred to as "convolutional layer 710"), a plurality of pooling layers 720 (individually referred to as "pooling layer 720"), and a plurality of fully connected layers 730 (individually referred to as "fully connected layer 730"). In other embodiments, the DNN 700 may include fewer, more, or different layers. In an inference of the DNN 700, the layers of the DNN 700 execute tensor computation that includes many tensor operations, such as convolution (e.g., multiply-accumulate (MAC) operations, etc.), pooling operations, elementwise operations (e.g., elementwise addition, elementwise multiplication, etc.), other types of tensor operations, or some combination thereof.

The convolutional layers 710 summarize the presence of features in the input image 705. The convolutional layers 710 function as feature extractors. The first layer of the DNN 700 is a convolutional layer 710. In an example, a convolutional layer 710 performs a convolution on an input tensor 740 (also referred to as IFM 740) and a filter 750. As shown in FIG. 7, the IFM 740 is represented by a 7×7×3 three-dimensional (3D) matrix. The IFM 740 includes 3 input channels, each of which is represented by a 7×7 two-dimensional (2D) matrix. The 7×7 2D matrix includes 7 input elements (also referred to as input points) in each row and seven input elements in each column. The filter 750 is represented by a 3×3×3 3D matrix. The filter 750 includes 3 kernels, each of which may correspond to a different input channel of the IFM 740. A kernel is a 2D matrix of weights, where the weights are arranged in columns and rows. A kernel can be smaller than the IFM. In the embodiments of FIG. 7, each kernel is represented by a 3×3 2D matrix. The 3×3 kernel includes 3 weights in each row and three weights in each column. Weights can be initialized and updated by backpropagation using gradient descent. The magnitudes of the weights can indicate importance of the filter 750 in extracting features from the IFM 740.

The convolution includes MAC operations with the input elements in the IFM 740 and the weights in the filter 750. The convolution may be a standard convolution 763 or a depthwise convolution 783. In the standard convolution 763, the whole filter 750 slides across the IFM 740. All the input channels are combined to produce an output tensor 760 (also referred to as output feature map (OFM) 760). The OFM 760 is represented by a 5×5 2D matrix. The 5×5 2D matrix includes 5 output elements (also referred to as output points) in each row and five output elements in each column. For purpose of illustration, the standard convolution includes one filter in the embodiments of FIG. 7. In embodiments where there are multiple filters, the standard convolution may produce multiple output channels in the OFM 760.

The multiplication applied between a kernel-sized patch of the IFM 740 and a kernel may be a dot product. A dot product is the elementwise multiplication between the kernel-sized patch of the IFM 740 and the corresponding kernel, which is then summed, always resulting in a single value. Because it results in a single value, the operation is often referred to as the "scalar product." Using a kernel smaller than the IFM 740 is intentional as it allows the same kernel (set of weights) to be multiplied by the IFM 740 multiple times at different points on the IFM 740. Specifically, the kernel is applied systematically to each overlapping part or kernel-sized patch of the IFM 740, left to right, top to bottom. The result from multiplying the kernel with the IFM 740 one time is a single value. As the kernel is applied multiple times to the IFM 740, the multiplication result is a 2D matrix of output elements. As such, the 2D output matrix (i.e., the OFM 760) from the standard convolution 763 is referred to as an OFM.

In the depthwise convolution 783, the input channels are not combined. Rather, MAC operations are performed on an individual input channel and an individual kernel and produce an output channel. As shown in FIG. 7, the depthwise convolution 783 produces a depthwise output tensor 780. The depthwise output tensor 780 is represented by a 5×5×3 3D matrix. The depthwise output tensor 780 includes 3 output channels, each of which is represented by a 5×5 2D matrix. The 5×5 2D matrix includes 5 output elements in each row and five output elements in each column. Each output channel is a result of MAC operations of an input channel of the IFM 740 and a kernel of the filter 750. For instance, the first output channel (patterned with dots) is a result of MAC operations of the first input channel (patterned with dots) and the first kernel (patterned with dots), the second output channel (patterned with horizontal strips) is a result of MAC operations of the second input channel (patterned with horizontal strips) and the second kernel (patterned with horizontal strips), and the third output channel (patterned with diagonal stripes) is a result of MAC operations of the third input channel (patterned with diagonal stripes) and the third kernel (patterned with diagonal stripes). In such a depthwise convolution, the number of input channels equals the number of output channels, and each output channel corresponds to a different input channel. The input channels and output channels are referred to collectively as depthwise channels. After the depthwise convolution, a pointwise convolution 793 is then performed on the depthwise output tensor 780 and a 1×1×3 tensor 790 to produce the OFM 760.

The OFM 760 is then passed to the next layer in the sequence. In some embodiments, the OFM 760 is passed through an activation function. An example activation function is the rectified linear activation function (ReLU). ReLU is a calculation that returns the value provided as input directly, or the value zero if the input is zero or less. The convolutional layer 710 may receive several images as input and calculate the convolution of each of them with each of the kernels. This process can be repeated several times. For instance, the OFM 760 is passed to the subsequent convolutional layer 710 (i.e., the convolutional layer 710 following the convolutional layer 710 generating the OFM 760 in the sequence). The subsequent convolutional layers 710 perform a convolution on the OFM 760 with new kernels and generates a new feature map. The new feature map may also be normalized and resized. The new feature map can be kernelled again by a further subsequent convolutional layer 710, and so on.

In some embodiments, a convolutional layer 710 has four hyperparameters: the number of kernels, the size F kernels (e.g., a kernel is of dimensions F×F×D pixels), the S step with which the window corresponding to the kernel is dragged on the image (e.g., a step of one means moving the window one pixel at a time), and the zero-padding P (e.g., adding a black contour of P pixels thickness to the input image of the convolutional layer 710). The convolutional layers 710 may perform various types of convolutions, such as 2-dimensional convolution, dilated or atrous convolution, spatial separable convolution, depthwise separable convolution, transposed convolution, and so on. The DNN 700 includes 16 convolutional layers 710. In other embodiments, the DNN 700 may include a different number of convolutional layers.

The pooling layers 720 down-sample feature maps generated by the convolutional layers, e.g., by summarizing the presence of features in the patches of the feature maps. A pooling layer 720 is placed between two convolution layers 710: a preceding convolutional layer 710 (the convolution layer 710 preceding the pooling layer 720 in the sequence of layers) and a subsequent convolutional layer 710 (the convolution layer 710 subsequent to the pooling layer 720 in the sequence of layers). In some embodiments, a pooling layer 720 is added after a convolutional layer 710, e.g., after an activation function (e.g., ReLU, etc.) has been applied to the OFM 760.

A pooling layer 720 receives feature maps generated by the preceding convolution layer 710 and applies a pooling operation to the feature maps. The pooling operation reduces the size of the feature maps while preserving their important characteristics. Accordingly, the pooling operation improves the efficiency of the DNN and avoids over-learning. The pooling layers 720 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is 2×2 pixels applied with a stride of two pixels, so that the pooling operation reduces the size of a feature map by a factor of 2, e.g., the number of pixels or values in the feature map is reduced to one quarter the size. In an example, a pooling layer 720 applied to a feature map of 6×6 results in an output pooled feature map of 3×3. The output of the pooling layer 720 is inputted into the subsequent convolution layer 710 for further feature extraction. In some embodiments, the pooling layer 720 operates upon each feature map separately to create a new set of the same number of pooled feature maps.

The fully connected layers 730 are the last layers of the DNN. The fully connected layers 730 may be convolutional or not. The fully connected layers 730 receive an input operand. The input operand defines the output of the convolutional layers 710 and pooling layers 720 and includes the values of the last feature map generated by the last pooling layer 720 in the sequence. The fully connected layers 730 apply a linear combination and an activation function to the input operand and generate a vector. The vector may contain as many elements as there are classes: element i represents the probability that the image belongs to class i. Each element is therefore between 0 and 1, and the sum of all is worth one. These probabilities are calculated by the last fully connected layer 730 by using a logistic function (binary classification) or a softmax function (multi-class classification) as an activation function.

In some embodiments, the fully connected layers 730 classify the input image 705 and return an operand of size N, where N is the number of classes in the image classification problem. In one example, N equals 3, and are three objects in the input image. Each element of the operand indicates the probability for the input image 705 to belong to a class. To calculate the probabilities, the fully connected layers 730 multiply each input element by weight, make the sum, and then apply an activation function (e.g., logistic if N=2, softmax if N>2). This is equivalent to multiplying the input operand by the matrix containing the weights. In an example, the vector includes 3 probabilities: a first probability indicating a first object is a tree, a second probability indicating a second object is a car, and a third probability indicating a third object is a person. In other embodiments where the input image 705 includes different objects or a different number of objects, the individual values can be different. In another example, image classification classifies image areas a "skin" or "not skin" to generate a skin segmentation map.

### Example Computing Device

FIG. 8 is a block diagram of an example computing device 800, in accordance with various embodiments. In some embodiments, the computing device 800 may be used for at least part of the temporal noise reduction system 100 of FIG. 1 and/or the deep learning system 600 in FIG. 6. A number of components are illustrated in FIG. 8 as included in the computing device 800, but any one or more of these components may be omitted or duplicated, as suitable for the application. In some embodiments, some or all of the components included in the computing device 800 may be attached to one or more motherboards. In some embodiments, some or all of these components are fabricated onto a single system on a chip (SoC) die. Additionally, in various embodiments, the computing device 800 may not include one or more of the components illustrated in FIG. 8, but the computing device 800 may include interface circuitry for coupling to the one or more components. For example, the computing device 800 may not include a display device 806, but may include display device interface circuitry (e.g., a connector and driver circuitry) to which a display device 806 may be coupled. In another set of examples, the computing device 800 may not include a video input device 818 or a video output device 808, but may include video input or output device interface circuitry (e.g., connectors and supporting circuitry) to which a video input device 818 or video output device 808 may be coupled.

The computing device 800 may include a processing device 802 (e.g., one or more processing devices). The processing device 802 processes electronic data from registers and/or memory to transform that electronic data into other electronic data that may be stored in registers and/or memory. The computing device 800 may include a memory 804, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 804 may include memory that shares a die with the processing device 802. In some embodiments, the memory 804 includes one or more non-transitory computer-readable media storing instructions executable for occupancy mapping or collision detection, e.g., the method 500 described above in conjunction with FIG. 5, some of the operations performed by the temporal noise reduction system 100 of FIG. 1, and/or some operations performed by the DNN system 600 in FIG. 6. The instructions stored in the one or more non-transitory computer-readable media may be executed by the processing device 802.

In some embodiments, the computing device 800 may include a communication chip 812 (e.g., one or more communication chips). For example, the communication chip 812 may be configured for managing wireless communications for the transfer of data to and from the computing device 800. The term "wireless" and its derivatives may be used to describe circuits, devices, systems, methods, techniques, communications channels, etc., that may communicate data using modulated electromagnetic radiation through a nonsolid medium. The term does not imply that the associated devices do not contain any wires, although in some embodiments they might not.

The communication chip 812 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 812 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 812 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 812 may operate in accordance with code-division multiple access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 812 may operate in accordance with other wireless protocols in other embodiments. The computing device 800 may include an antenna 822 to facilitate wireless communications and/or to receive other wireless communications (such as AM or FM radio transmissions).

In some embodiments, the communication chip 812 may manage wired communications, such as electrical, optical, or any other suitable communication protocols (e.g., the Ethernet). As noted above, the communication chip 812 may include multiple communication chips. For instance, a first communication chip 812 may be dedicated to shorter-range wireless communications such as Wi-Fi or Bluetooth, and a second communication chip 812 may be dedicated to longer-range wireless communications such as global positioning system (GPS), EDGE, GPRS, CDMA, WiMAX, LTE, EV-DO, or others. In some embodiments, a first communication chip 812 may be dedicated to wireless communications, and a second communication chip 812 may be dedicated to wired communications.

The computing device 800 may include battery/power circuitry 814. The battery/power circuitry 814 may include one or more energy storage devices (e.g., batteries or capacitors) and/or circuitry for coupling components of the computing device 800 to an energy source separate from the computing device 800 (e.g., AC line power).

The computing device 800 may include a display device 806 (or corresponding interface circuitry, as discussed above). The display device 806 may include any visual indicators, such as a heads-up display, a computer monitor, a projector, a touchscreen display, a liquid crystal display (LCD), a light-emitting diode display, or a flat panel display, for example.

The computing device 800 may include a video output device 808 (or corresponding interface circuitry, as discussed above). The video output device 808 may include any device that generates an audible indicator, such as speakers, headsets, or earbuds, for example.

The computing device 800 may include a video input device 818 (or corresponding interface circuitry, as discussed above). The video input device 818 may include any device that generates a signal representative of a sound, such as microphones, microphone arrays, or digital instruments (e.g., instruments having a musical instrument digital interface (MIDI) output).

The computing device 800 may include a GPS device 816 (or corresponding interface circuitry, as discussed above). The GPS device 816 may be in communication with a satellite-based system and may receive a location of the computing device 800, as known in the art.

The computing device 800 may include another output device 810 (or corresponding interface circuitry, as discussed above). Examples of the other output device 810 may include a video codec, a video codec, a printer, a wired or wireless transmitter for providing information to other devices, or an additional storage device.

The computing device 800 may include another input device 820 (or corresponding interface circuitry, as discussed above). Examples of the other input device 820 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 800 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 800 may be any other electronic device that processes data.

### Selected Examples

Example 1 provides a computer-implemented method, including receiving an input image frame from an imager; detecting a face in the input image frame; cropping the input image frame close to the face to generate a cropped image; identifying a plurality of skin tones in pixels of the face in the cropped image; generating a latent skin representation of the plurality of skin tones in the pixels of the face; extracting full image features from the input image frame; generating, at a cross-attention module, cross-attention features for the input image frame based on the latent skin representation and the full image features; combining the cross-attention features and the full image features to generate merged features; and generating a skin segmentation output based on the merged features.

Example 2 provides the computer-implemented method according to example 1, where generating the cross-attention features includes projecting the full image features onto the latent skin representation at a cross-attention module to generate cross-attention features for the input image frame.

Example 3 provides the computer-implemented method according to examples 1-2, where identifying the plurality of skin tones in pixels of the face includes generating cropped image facial features.

Example 4 provides the computer-implemented method according to example 3, further including applying a multi-layer perceptron layer on the cropped image facial features to emphasize selected features of the cropped image facial features and generate the latent skin representation of the plurality of skin tones in the pixels of the face.

Example 5 provides the computer-implemented method according to examples 1-3, where generating cross-attention features for the input image frame includes performing cross-attention on the input image frame and the latent skin representation to emphasize skin-related features.

Example 6 provides the computer-implemented method according to example 5, where generating cross-attention features for the input image frame includes performing cross-attention on the input image frame and the latent skin representation to de-emphasize non-skin-related features.

Example 7 provides the computer-implemented method according to examples 1-3 and 5, further including applying a linear projection to the cross attention features for channel dimension alignment.

Example 8 provides one or more non-transitory computer-readable media storing instructions executable to perform operations, the operations including receiving an input image frame from an imager; detecting a face in the input image frame; cropping the input image frame close to the face to generate a cropped image; identifying a plurality of skin tones in pixels of the face in the cropped image; generating a latent skin representation of the plurality of skin tones in the pixels of the face; extracting full image features from the input image frame; generating, at a cross-attention module, cross-attention features for the input image frame based on the latent skin representation and the full image features; combining the cross-attention features and the full image features to generate merged features; and generating a skin segmentation output based on the merged features.

Example 9 provides the one or more non-transitory computer-readable media according to example 8, where generating the cross-attention features includes projecting the full image features onto the latent skin representation at a cross-attention module to generate cross-attention features for the input image frame.

Example 10 provides the one or more non-transitory computer-readable media according to examples 8-9, where identifying the plurality of skin tones in pixels of the face includes generating cropped image facial features.

Example 11 provides the one or more non-transitory computer-readable media according to example 10, further including applying a multi-layer perceptron layer on the cropped image facial features to emphasize selected features of the cropped image facial features and generate the latent skin representation of the plurality of skin tones in the pixels of the face.

Example 12 provides the one or more non-transitory computer-readable media according to examples 8-10, where generating cross-attention features for the input image frame includes performing cross-attention on the input image frame and the latent skin representation to emphasize skin-related features.

Example 13 provides the one or more non-transitory computer-readable media according to example 12, where generating cross-attention features for the input image frame includes performing cross-attention on the input image frame and the latent skin representation to de-emphasize non-skin-related features.

Example 14 provides the one or more non-transitory computer-readable media according to examples 8-10 and 12, further including applying a linear projection to the cross attention features for channel dimension alignment.

Example 15 provides an apparatus, including a computer processor for executing computer program instructions; and a non-transitory computer-readable memory storing computer program instructions executable by the computer processor to perform operations including receiving an input image frame from an imager; detecting a face in the input image frame; cropping the input image frame close to the face to generate a cropped image; identifying a plurality of skin tones in pixels of the face in the cropped image; generating a latent skin representation of the plurality of skin tones in the pixels of the face; extracting full image features from the input image frame; generating, at a cross-attention module, cross-attention features for the input image frame based on the latent skin representation and the full image features; combining the cross-attention features and the full image features to generate merged features; and generating a skin segmentation output based on the merged features.

Example 16 provides the apparatus according to example 15, where generating the cross-attention features includes projecting the full image features onto the latent skin representation at a cross-attention module to generate cross-attention features for the input image frame.

Example 17 provides the apparatus according to examples 15-16, where identifying the plurality of skin tones in pixels of the face includes generating cropped image facial features.

Example 18 provides the apparatus according to example 17, the operations further including applying a multi-layer perceptron layer on the cropped image facial features to emphasize selected features of the cropped image facial features and generate the latent skin representation of the plurality of skin tones in the pixels of the face.

Example 19 provides the apparatus according to examples 15-17, where generating cross-attention features for the input image frame includes performing cross-attention on the input image frame and the latent skin representation to emphasize skin-related features.

Example 20 provides the apparatus according to example 19, where generating cross-attention features for the input image frame includes performing cross-attention on the input image frame and the latent skin representation to de-emphasize non-skin-related features.

Example 21 provides the computer-implemented method according to examples 1-7, wherein combining the cross-attention features and the full image features to generate merged features includes combining the cross-attention features and the full image features by summation.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A computer-implemented method, comprising:
receiving an input image frame from an imager;
detecting a face in the input image frame;
cropping the input image frame close to the face to generate a cropped image;
identifying a plurality of skin tones in pixels of the face in the cropped image;
generating a latent skin representation of the plurality of skin tones in the pixels of the face;
extracting full image features from the input image frame;
generating, at a cross-attention module, cross-attention features for the input image frame based on the latent skin representation and the full image features;
combining the cross-attention features and the full image features to generate merged features; and
generating a skin segmentation output based on the merged features.

2. The computer-implemented method according to claim 1, wherein generating the cross-attention features comprises projecting the full image features onto the latent skin representation at a cross-attention module to generate cross-attention features for the input image frame.

3. The computer-implemented method according to claims 1-2, wherein identifying the plurality of skin tones in pixels of the face includes generating cropped image facial features.

4. The computer-implemented method according to claim 3, further comprising applying a multi-layer perceptron layer on the cropped image facial features to emphasize selected features of the cropped image facial features and generate the latent skin representation of the plurality of skin tones in the pixels of the face.

5. The computer-implemented method according to claims 1-3, wherein generating cross-attention features for the input image frame includes performing cross-attention on the input image frame and the latent skin representation to emphasize skin-related features.

6. The computer-implemented method according to claim 5, wherein generating cross-attention features for the input image frame includes performing cross-attention on the input image frame and the latent skin representation to de-emphasize non-skin-related features.

7. The computer-implemented method according to claim 1-3 and 5, further comprising applying a linear projection to the cross-attention features for channel dimension alignment.

8. One or more non-transitory computer-readable media storing instructions executable to perform operations, the operations comprising:
receiving an input image frame from an imager;
detecting a face in the input image frame;
cropping the input image frame close to the face to generate a cropped image;
identifying a plurality of skin tones in pixels of the face in the cropped image;
generating a latent skin representation of the plurality of skin tones in the pixels of the face;
extracting full image features from the input image frame;
generating, at a cross-attention module, cross-attention features for the input image frame based on the latent skin representation and the full image features;
combining the cross-attention features and the full image features to generate merged features; and
generating a skin segmentation output based on the merged features.

9. The one or more non-transitory computer-readable media according to claim 8, wherein generating the cross-attention features comprises projecting the full image features onto the latent skin representation at a cross-attention module to generate cross-attention features for the input image frame.

10. An apparatus, comprising:
a computer processor for executing computer program instructions; and
a non-transitory computer-readable memory storing computer program instructions executable by the computer processor to perform operations comprising:
receiving an input image frame from an imager;
detecting a face in the input image frame;
cropping the input image frame close to the face to generate a cropped image;
identifying a plurality of skin tones in pixels of the face in the cropped image;
generating a latent skin representation of the plurality of skin tones in the pixels of the face;
extracting full image features from the input image frame;
generating, at a cross-attention module, cross-attention features for the input image frame based on the latent skin representation and the full image features;
combining the cross-attention features and the full image features to generate merged features; and
generating a skin segmentation output based on the merged features.

11. The apparatus according to claim 10, wherein generating the cross-attention features comprises projecting the full image features onto the latent skin representation at a cross-attention module to generate cross-attention features for the input image frame.

12. The apparatus according to claims 10-11, wherein identifying the plurality of skin tones in pixels of the face includes generating cropped image facial features.

13. The apparatus according to claim 12, the operations further comprising applying a multi-layer perceptron layer on the cropped image facial features to emphasize selected features of the cropped image facial features and generate the latent skin representation of the plurality of skin tones in the pixels of the face.

14. The apparatus according to claim 10-12, wherein generating cross-attention features for the input image frame includes performing cross-attention on the input image frame and the latent skin representation to emphasize skin-related features.

15. The apparatus according to claim 14, wherein generating cross-attention features for the input image frame includes performing cross-attention on the input image frame and the latent skin representation to de-emphasize non-skin-related features.
